(19)

Europäisches
Patentamt

European
Patent Office

Office européen
des brevets

(11) **EP 2 870 798 B1**

(12) **EUROPEAN PATENT SPECIFICATION**

(45) Date of publication and mention
of the grant of the patent:
**20.03.2019 Bulletin 2019/12**

(21) Application number: **13737097.9**

(22) Date of filing: **01.07.2013**

(51) Int Cl.:
*H04W 48/02* *(2009.01)*          *H04W 28/02* *(2009.01)*
*H04W 4/00* *(2018.01)*          *H04W 74/08* *(2009.01)*

(86) International application number:
**PCT/US2013/048912**

(87) International publication number:
**WO 2014/011432 (16.01.2014 Gazette 2014/03)**

(54) **METHOD AND SYSTEM FOR REDUCING CONGESTION ON A COMMUNICATION NETWORK**

VERFAHREN UND SYSTEM ZUR ÜBERLASTVERRINGERUNG IN EINEM
KOMMUNIKATIONSNETZWERK

PROCÉDÉ ET SYSTÈME POUR RÉDUIRE L'ENCOMBREMENT SUR UN RÉSEAU DE
TÉLÉCOMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2012 US 201261669411 P
18.04.2013 US 201313865222**

(43) Date of publication of application:
**13.05.2015 Bulletin 2015/20**

(73) Proprietor: **Google Technology Holdings LLC
Mountain View, CA 94043 (US)**

(72) Inventor: **DROSTE, Scott T.
Crystal Lake, Illinois 60014 (US)**

(74) Representative: **Betten & Resch
Patent- und Rechtsanwälte PartGmbB
Maximiliansplatz 14
80333 München (DE)**

(56) References cited:
EP-A1- 2 192 807          EP-A1- 2 369 883
EP-A1- 2 472 986          EP-A2- 2 373 110
US-A1- 2012 033 613      US-A1- 2012 039 171

- **CATT: "Discussion on RACH overload for MTC",
3GPP DRAFT; R2-102780_DISCUSSION ON
RACH OVERLOAD FOR MTC, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no. Montreal,
Canada; 20100510, 4 May 2010 (2010-05-04),
XP050423124, [retrieved on 2010-05-04]**
- **ZTE CORPORATION: "Enhancement on RACH
with mixed traffic", 3GPP DRAFT; GP-110742
ENHANCEMENT ON RACH WITH MIXED
TRAFFIC, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. TSG
GERAN, no. Dallas; 20110516, 12 May 2011
(2011-05-12), XP050487207, [retrieved on
2011-05-12]**

**EP 2 870 798 B1**

**Description**

**TECHNICAL FIELD**

The present disclosure relates generally to network communication and, more particularly, to methods and systems for reducing congestion on a communication network.

**BACKGROUND**

Congestion is a problem that all types of communication networks experience. It typically occurs when too many devices attempt to simultaneously access the same resources. In cellular networks, network congestion can take the form of Access Point Name (APN) congestion. An APN is an identifier used by a user equipment (UE) to identify a network resource when attempting to connect to a resource of the cellular network. For example, if the resource is a packet data network (PDN) network, the APN identifies the PDN and the service or services of the PDN required by the UE. Such services can include a connection to a wireless application protocol (WAP) server, a connection to a multimedia messaging service (MMS). APNs are used in many types of networks, including Third Generation (3G) data networks, general packet radio service (GPRS) networks, and long term evolution (LTE) networks. When it receives the APN from the UE, a network uses the APN to determine the type of connection to create for the UE. For example, the network may use the APN to determine what IP addresses should be assigned to the UE, what security methods should be used, and whether the UE should be connected to a private network. When too many UEs simultaneously request the same resources (e.g., the same radio and core network resources) of the cellular network, "APN congestion" is said to have occurred. There are several possible underlying causes of APN congestion, such as the network having insufficient network element capacity, memory, transaction processing capability, etc. to handle a sudden spike in the number of requests. European patent application publication no. EP 2369883 A1 presents a method for paging a group of MTC devices, and for transmitting parameter information to the MTC devices using the paging mechanism. US patent application publication no. US 2012/033613 A1 proposes an adaptive RACH operation for machine-type communications (MTC) in a 3GPP wireless network. The adaptive RACH operation is based on context information to reduce RACH collision probability, to control network overload, and to enhance system performance. US patent application publication no. US 2012/039171 A1 presents a method for controlling network congestion. A potential overload of the network is detected. An access class for which to change overload control information is selected. The overload control information is adjusted for the selected access class. The adjusted overload control information is then transmitted.

**BRIEF DESCRIPTION OF THE DRAWINGS**

The invention is defined in appended claims 1 to 8. The various aspects, features and advantages of the invention will become more fully apparent to those having ordinary skill in the art upon careful consideration of the following Detailed Description thereof with the accompanying drawings described below. The drawings may have been simplified for clarity and are not necessarily drawn to scale.

FIG. 1 is a wireless communication system in accordance with an embodiment of the invention, and FIG. 1a is one embodiment of an APN.

FIG. 2 is a schematic block diagram of a UE according to an embodiment of the invention.

FIG. 3 shows the format of an IMEI in accordance with an embodiment of the invention.

FIG. 4 shows the format of an IMEISV in accordance with an embodiment of the invention.

FIGS. 5-8 illustrate the results of various simulations.

FIG. 9 illustrates a process that a UE may carry out according to an embodiment of the invention.

**DETAILED DESCRIPTION**

As previously discussed, APN congestion may be triggered by a variety of events. One example can be found in the context of Machine-Type Communication (MTC) devices. Although many MTC devices may be powered by batteries (or have a battery back-up system), it is anticipated that many will use the commercial power mains as their source of power. Examples of MTC

scenarios that may use commercial power mains include in-home or in-business utility monitoring and reporting, i.e., "wireless meter reading," vending applications, and the like.

It is not uncommon for many MTC devices (e.g., tens of thousands) to rely on the same network (e.g., a single cellular network) and to use the same source of commercial power. These MTC devices may, for example, be located in the same metropolitan area. However, if the commercial power source fails (due to a blackout, for example) and is then subsequently restored, then all of these MTC devices will simultaneously attempt to attach to the network to obtain the same resources. For example, the MTC devices may all attempt to connect to a server to relay diagnostic or telemetry data. The resulting flood of requests for the same resources may cause a network overload and cause APN congestion. The APN congestion would impact not only service to MTC devices, but also service to traditional mobile phone and data card users.

To reduce the likelihood of APN congestion following a power failure/restoration event, a UE (e.g., an MTC device) that is communicatively linked to a network may delay its initial attach request to the communication network. According to an embodiment of the invention, the length of this delay may be a function of a hardware identifier that is unique or nearly unique to the UE. Examples of values that may be used include the UE's International Mobile station Equipment Identity (IMEI), the UE's International Mobile station Equipment Identity and Software Version number (IMEISV), and the UE's manufacturer serial number (MSN). Also, an operator-provided identifier, such as an International Mobile Subscriber Identity (IMSI), may be used. Additionally, one or more of constituent parts of these values may be used. According to another embodiment of the invention, the length of time that the UE delays attachment to the network may be a function of a randomly generated number.

In various implementations, the delayed attach requests may be uniformly distributed over a network operator-defined period of time that takes into account the resources and capacity of the communication network.

In another embodiment of the invention, an operator of a communication network with which multiple UEs are communicating may establish prioritized groupings of UEs within the network as a function of one or more of a hardware identifier and generated random number of each of the UEs.

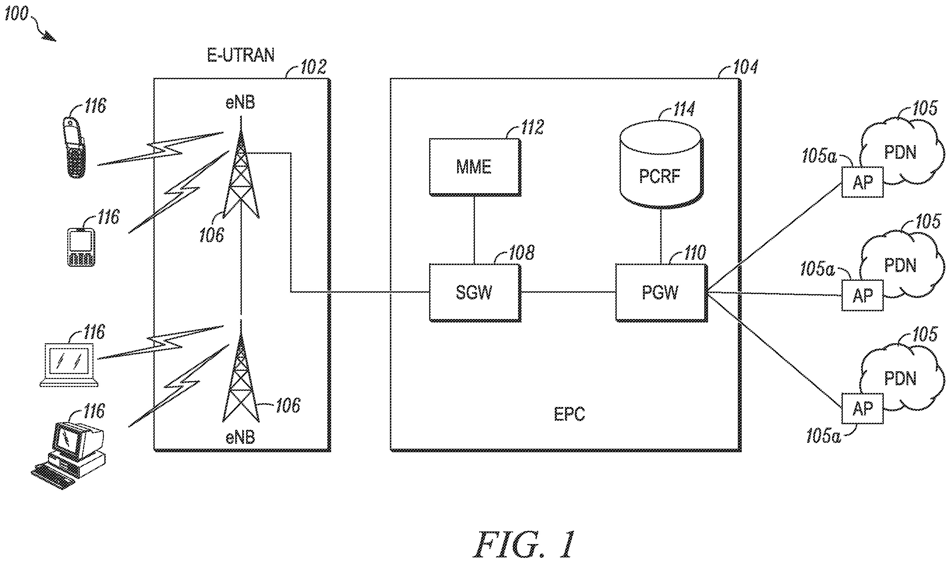

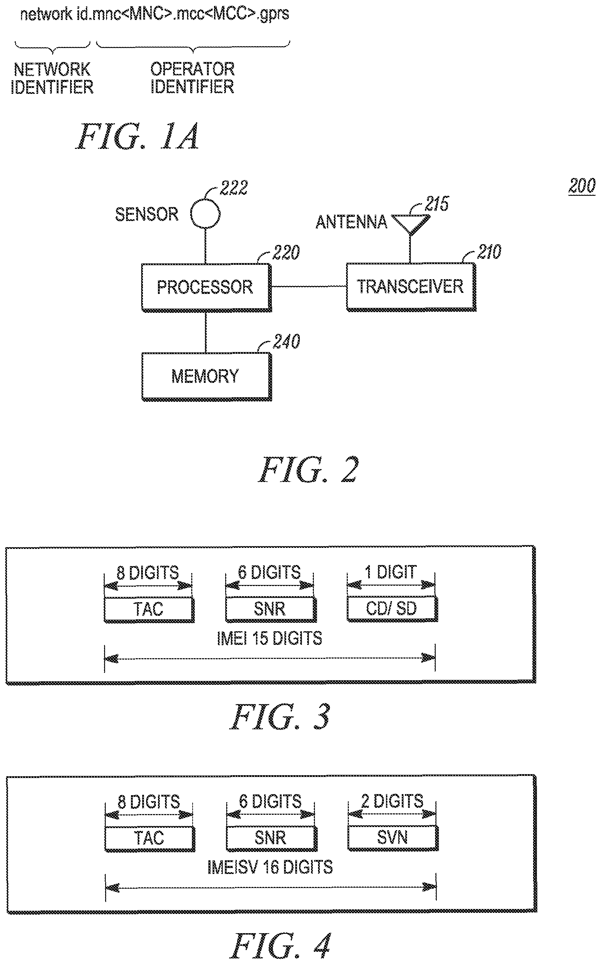

Turning now to FIG. 1, an example of an LTE communication system in which an embodiment of the invention may be employed will now be described. The communication system, generally labeled 100, comprises an evolved UMTS Terrestrial Radio Access Network (E-UTRAN) 102, an Evolved Packet Core network (EPC) 104, and Packet Data Networks (PDNs) 105. The EPC 104 is communicatively linked to the E-UTRAN 102. The E-UTRAN 102 includes enhanced Node base stations (eNB) 106, while the EPC 104 includes Serving Gateway (SGW) 108, a Packet Data Network gateway (PGW) 110, a Mobile Management Element (MME) 112, and a Policy and Charging Rules Function unit (PCRF) 114. The SGW 108 is communicatively linked to the E-UTRAN 102 as well as to the MME 112 and to the PGW 110. The PGW 110 is also communicatively linked to the PCRF 114 as well as to the PDNs 105. UEs 116 are communicatively linked to the eNBs 106.

The SGW 108 acts as an interface between the E-UTRAN and the EPC network 104. SGW 108 also maintains data paths between the eNBs 106 and the PGW 110. When, for example, one or more of the UEs 116 move from an area served by one of the eNBs 106 to an area served by another of the eNBs 106, data packets from the UE 116s are routed through SGW 108. The PGW 110 acts as an interface between the EPC 110 and the PDNs 105. The PGW 110 facilitates policy enforcement (e.g., by applying operator-defined rules for resource allocation and usage), packet filtering (e.g., deep packet inspection for application-type detection), and charging support (e.g., allowing an operator to carry out per-URL charging).

The MME 112 performs signaling and control functions to manage the UEs access to various portions of E-UTRAN 102 and the EPC 104. The MME 112 also assigns network resources to the UEs 116, and controls paging, roaming and handover functions and authentication of the UEs 116. When a UE 116 attempts to attach to the E-UTRAN 102, the MME 112 processes the request, including (1) checking a Home Subscriber Server (HSS) to determine whether the UE is permitted to access the E-UTRAN, and (2) authenticating the UE. The PCRF 114 supports applications that require dynamic policy and/or charging control.

The PDNs 105 include various types of entities, including public networks (such as the Internet) and private networks (such as cellular provider networks or networks used by corporations). One or more of the PDNs 105 may be accessed via a larger PDN, such as the Internet. Each of the PDNs 105 includes one or more Access Points (APs) 105a that controls access to the PDN 105. An AP 105a may be implemented in a number of ways, including as a gateway server.

The E-UTRAN 102 may be distributed over a geographical region. The UEs 116 communicate with one another, with UEs on other networks, with the EPC 104, and with the PDNs 105, among other entities, via the E-UTRAN 102. Such communication may occur in the time, frequency or spatial domain or a combination thereof.

It is to be understood that other types of devices may be used in place of the eNBs 106, including a generic access point, an access terminal, other types of base stations, a Home NodeB (HNB), a Home eNodeB (HeNB), a Macro eNodeB (MeNB), a Donor eNodeB (DeNB), a relay node (RN), a femtocell, a femto-node, a pico-cell, and a network node. Each eNB 106 may include one or more transmitters for downlink transmissions and one or more receivers for uplink transmissions.

Referring still to FIG. 1, there may be any number of eNBs 106 as well as any number of UEs 116. Each eNB 106 may serve a number of the UEs 116 within a corresponding serving area, for example, a cell or a cell sector, via a wireless communication link. The UEs 116 may be fixed or mobile. The UEs 116 may be implemented in many ways, including MTC devices, subscriber units, mobiles, mobile stations, mobile units, users, terminals, subscriber stations, user terminals, wireless communication devices, and relay nodes. Each of the UEs 116 includes one or more transmitters and one or more receivers. According to an embodiment of the invention, the eNBs 106 transmit downlink communication signals to the UEs 116 that are modulated using an orthogonal frequency division multiplexing (OFDM) scheme, and the UEs 116 communicate with the eNBs 106 via uplink communication signals modulated using a single carrier frequency division multiple access (SC-FDMA) scheme. The UEs 116 may also communicate with the eNBs 106 via a relay node.

Although FIG. 1 depicts an LTE system, the various embodiments described herein may also be applicable to other types of communication systems. More generally, embodiments of the invention may be implemented on a system that uses some other open or proprietary communication protocol, such as one of the IEEE 802.11 protocols, one of the CDMA protocols, UMTS, and GSM. The system may, for example, use spreading techniques such as multi-carrier CDMA (MC-CDMA), multi-carrier direct sequence CDMA (MC-DS-CDMA), Orthogonal Frequency and Code Division Multiplexing (OFCDM) with one or two dimensional spreading. Various embodiments may also be based on simpler time and/or frequency division multiplexing/ multiple access techniques, or a combination of these various techniques. In alternate embodiments, the wireless communication system may employ other communication protocols including, but not limited to, TDMA or direct sequence CDMA. The communication system may also be a Time Division Duplex (TDD) or Frequency Division Duplex (FDD) system.

The UEs 116 may be implemented as devices that communicate using MTC or Machine-to-Machine (M2M) communications.

To communicate with one or more of the PDNs 105 and access resources therein in an embodiment of the invention, a UE 116 identifies the appropriate PDN 105 by using an APN associated with the PDN 105. More specifically, the UE 116 uses the address of the AP 105a that controls access to the desired PDN 105. In one embodiment, an APN is structured as shown in FIG. 1a. The APN in this example has two parts: (1) a network identifier, which indicates the external network in which the desired PDN is located, and which may also define the resource requested by the UE 116; and optionally (2) the operator identifier, which indicates the operator's PDN (e.g., the owner of the PDN 105) in which the resource is located. An MCC (mobile country code) identifying the country in which the PDN 105 is located and an MNC (mobile network code) which identifies which mobile network controls the PDN 105. Together, the MCC and the MNC may uniquely identify a mobile network operator (e.g., a cellular service provider). An example of an APN is "tmobile.internet." One example of APN congestion is when too many UEs 116 are attempting to access the same resource on the same PDN 105 via the same AP 105a (i.e., they are all using the same APN).

FIG. 2 illustrates a possible implementation of the UEs 106 of FIG. 1. The UE, generally labeled 200, includes a transceiver 210 communicatively linked to a processor 220 and to an antenna 215. The processor 220 is communicatively linked to a sensor 222, which senses whether power has been restored to the UE following a power loss. The UE 200 implements a wireless communication protocol, as discussed above, and may be capable of conducting circuit or packet switched communications or both. In one embodiment, the processor 220 is implemented as a digital processor that executes instruction stored in one or more memory devices 240 to perform the functionality described herein. The processor 220 may also be a baseband processor or an application processor, or some combination of the two. Alternatively, the processor 220 may be implemented as an equivalent hardware circuit or as a combination of hardware and software. In one embodiment, various aspects of which are described further below in the context of an LTE communication system, the UE 200 is a Discrete Fourier Transform-Spread-Orthogonal Frequency Division Multiple Access (DFT-S-OFDMA) device. Alternatively, the UE 200 may implement one or more other protocols.

In an embodiment of the invention, the length of time that each UE 116 of FIG. 1 waits to attach to the E-UTRAN 102 is a function of its hardware identifier. For example, the UE's hardware identifier may be used as an input to an algorithm that calculates a back-off timer value for the UE's initial attach request to the communication network 102 following a power-failure/power-restoration event. The hardware identifier may be unique to each of the UEs 106. In one embodiment, a 3GPP defined IMEI or IMEISV is used as the unique hardware identifier. Other unique identifiers could be used as well. For example, an MSN could be used. Also, an operator-provided identifier, such as an IMSI, could be used.

In another embodiment of the invention, each UE 116 may generate a random number as an input to an algorithm that calculates a back-off timer value for the UEs initial attach request following a power-failure/power-restoration event.

In yet another embodiment of the invention each UE 116 may use its hardware identifier and/or a random number generator to enable an operator of the E-UTRAN to establish prioritized groupings of UEs within the network. This enables the operator to permit UEs with higher priority to attempt to attach to the E-UTRAN prior to lower priority UEs making an attempt.

Other procedures may be implemented in conjunction with any of the aforesaid techniques. For example, in an embodiment of the invention, each UE 116 (FIG. 1) is provided with parameters to control the time period over which the UE 116 should attempt a network attach procedure following a power failure/restoration event. These parameters may be provided by the operator of the E-UTRAN 102 to the UEs 106 (by downlink signal from an eNB 106, for example). Such parameters may include one or more of a minimum time a UE 116 may delay its attach attempt and a maximum time that the UE 116 may delay its attach attempt. These parameters may also be provisioned in the UE 116 at the time of manufacture, or through an over the air provisioning mechanism such one or more of those defined by Open Mobile Alliance Device Management (OMA DM). Additionally, the parameters may be provided through non-access stratum network signaling such as during a previous attach attempt or tracking area update procedure. In each case, the UE may retain the most recently provisioned parameter values in non-volatile memory (such as the one or more memory devices 240 of FIG. 2) so that the parameter values are available to the UE 116 following a power failure/restoration event.

In any of the above-described embodiments, the UE 116 (FIG. 1) may be configured to detect a power failure/power restoration event. The UE 116 may accomplish this by checking its last power-down status indicator to determine if the most recent power-down event was due to loss of power or by a normal power-down or power cycle due to maintenance (such as would possibly occur following a software update of the UE 116).

As previously discussed, some embodiments of the invention rely on the use of the IMEI of one or more of the UEs 106 as an input to an algorithm that produces a back-off timer value for attach requests following a power-failure/power-restoration event. Referring to FIG. 3, an example of a possible implementation of an International Mobile station Equipment Identity (IMEI) will now be described. The IMEI is composed of the following elements (each element having decimal digits): a Type Allocation Code (TAC) (8 digits long); a Serial Number (SNR) uniquely identifying each UE within the TAC (6 digits long); and a Check Digit (CD) / Spare Digit (SD), which is used to determine if preceding digits are entered correctly. In some embodiments, the SNR alone could be input into the algorithm.

As an alternative to the use of the IMEI, the UE's International Mobile station Equipment Identity and Software Version Number (IMEISV) may serve as an input to the attach back-off timer algorithm. Referring to FIG. 4, an example of a possible implementation of an IMEISV will now be described. The IMEISV includes the following elements (which may use decimal digits): a Type Allocation Code (TAC) (8 digits long); a Serial Number (SNR), which uniquely identifies each UE within each TAC (6 digits long); and a Software Version Number (SVN), which identifies the software version number of the UE 116 (2 digits long).

An example of an algorithm that a UE 116 may execute (e.g., on the processor 220 of FIG. 2) to calculate a back-off time will now be described. The algorithm uses 'N' of the least significant digits of either the IMEI or IMEISV along with a minimum time delay to spread the attach requests of the UE 116 between a minimum and a maximum time delay.

$$[1] \qquad T_{Backoff}\left(N, IMEI\right) = T_{Min} + \left\lfloor \left(\frac{V_{IMEI}\left(N\right)}{10^N - 1}\right) \times \left(T_{Max} - T_{Min}\right) \right\rfloor$$

Where $T_{Backoff}(N, IMEI)$ = Time delay for initial attach request of the UE following power restoration to the UE, in units of time, as a function of N least significant digits of the UE's IMEI or IMEISV ($N, IMEISV$ if IMEISV is used); $T_{Min}$ = Minimum delay for UE's initial request following power restoration, in units of time; $T_{Max}$ = Maximum delay for the UE's initial request following power restoration, in units of time; $N$ = Number of least significant digits of IMEI or IMEISV considered in the calculation; and $V_{IMEI}(N)$ = Decimal value of "N" least significant digits of the UE's IMEI or IMEISV ($V_{IMEISV}(N)$ if IEMEISV is used). This is equivalent to $IMEI$ mod $10^N$ or $IMEISV$ mod $10^N$.

An example of how $V_{IMEI}(N)$ is determined will now be described. Assuming the IMEI value is 356914023690342, then the processor 220 (FIG. 2) retrieves the IMEI value from the memory 240 and inputs the IMEI value into equation, then

$$[1] \qquad V_{IMEI}\left(3\right) = 342 \,, \quad V_{IMEI}\left(5\right) = 90342 \,, \quad V_{IMEI}\left(10\right) = 4023690342 \,,$$

etc. $V_{IMEISV}(N)$ may be calculated in a similar fashion.

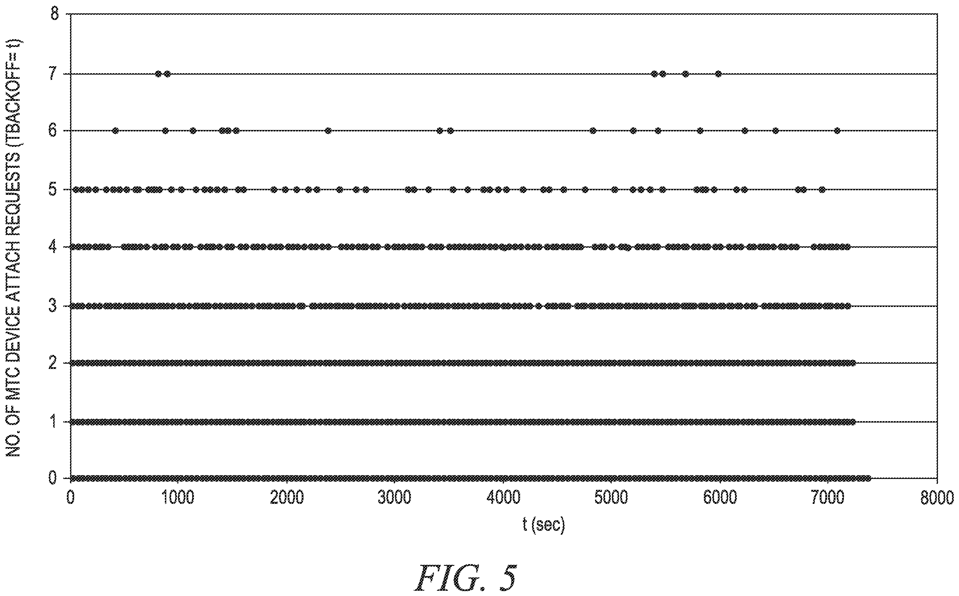

An example of the impact of various embodiments of the invention will now be described with respect to the simulation shown in FIG. 5. The simulation was conducted under the assumption that the UE would be implemented as an MTC device. The minimum delay for the initial attach request was set at $T_{Min}$ = 15 sec. In other words, it was assumed that no MTC device would attempt to transmit an attach request to the communication network within the first 15 sec after power restoration. The maximum delay for the initial request was set at $T_{Max}$ = 7200 sec. In other words, it was assumed that all MTC devices would have completed their attach requests within 7200 sec (2 hrs) following power restoration. The number of least significant digits of IMEI considered in calculation $N$ = 6. The number of MTC devices in network was set to 10,000, while the number of unique TAC codes was set at 5. The number of TAC codes may represent the number of different device manufacturers or device models within the network.

FIG. 5 illustrates the results of the simulation, showing the distribution of MTC device attach requests over the interval from 15 s to 2 hrs. The results show that, at most, the network can expect 7 attach requests over any one second interval in the period from $T_{Min}$ to $T_{Max}$.

Table 1 shows the rate of occurrence for a given number of MTC device attach requests per second over the time period of the simulation. The table shows that 25.17% of the time, a network can expect no MTC devices to attempt an attach request for any one second interval over the time period. Similarly, 34.50% of the time, it can expect one MTC device attach request over a given one second interval.

| Number of MTC Device Attach Requests per second over interval from $T_{Min}$ to $T_{Max}$ (15s - 2hrs) | Number of Times Occurring | Rate of Occurrence |
|---|---|---|
| 0 | 1809 | 25.17% |
| 1 | 2479 | 34.50% |
| 2 | 1698 | 23.63% |
| 3 | 801 | 11.15% |
| 4 | 303 | 4.22% |
| 5 | 72 | 1.00% |
| 6 | 18 | 0.25% |
| 7 | 6 | 0.08% |
| 8 | 0 | 0% |
| 9 | 0 | 0% |

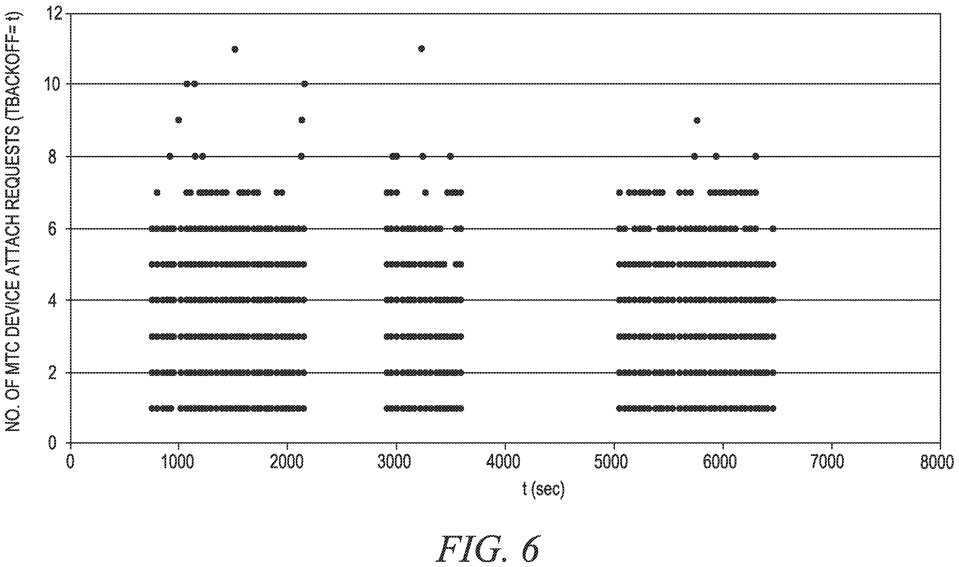

As can be seen, when the value of N exceeds 7 and the number of unique TAC codes present in the MTC devices within an operator's network is small, the values of $T_{Backoff}$ tend to center about values influenced by the lower order digits of the TAC codes. This is illustrated in FIG. 6.

Although the previous description focused on the use of IMEI or IMEISV as the input to the calculation of $T_{Backoff}$, it is understood that other manufacturer hardware identifiers or operator provisioned identifiers could be used as an input to the algorithm. In particular, it should be noted that wireless networks operating in accordance with specifications developed by Third Generation Partnership Project 2 (3GPP2) make use of the MEID (Mobile Equipment Identifier) as the unique terminal hardware identifier. For terminals that may operate in both 3GPP and 3GPP2 networks, a single MEID is provisioned in the device (e.g., in the memory 240 of the UE 200 of FIG. 2) and shares a common format with IMEI - being composed of decimal digits. However, for devices designed to operate solely in 3GPP2 networks, the MEID is composed of hexadecimal digits. As such, the previously provided example algorithm for calculating $T_{Backoff}$ could be modified to accommodate the MEID hexadecimal format, and would take the form:

$$[2] \qquad T_{Backoff}\left(N, MEID\right) = T_{Min} + \left\lfloor \left(\frac{V_{MEID}(N)}{16^N - 1}\right) \times \left(T_{Max} - T_{Min}\right) \right\rfloor$$

where $T_{Backoff}(N,MEID)$ = Time delay for initial attach request following power restoration, in units of time, as a function of N least significant hexadecimal digits of UE's MEID; $T_{Min}$ = Minimum delay for initial request following power restoration to the UE, in units of time; $T_{Max}$ = Maximum delay for initial request following power restoration to the UE, in units of time; $N$ = Number of least significant hexadecimal digits of the UE's MEID considered in calculation; and $V_{MEID}(N)$ = Decimal value of "N" least significant hexadecimal digits of MEID.

An example of how to determine $V_{MEID}(N)$ will now be described. Assuming that the MEID value is A0000002261F342, equation [2] would be evaluated to:

$$V_{MEID}(3) = 834, \; V_{MEID}(5) = 127810, \; V_{MEID}(10) = 576844610,$$

etc.

As an alternative to the use of a hardware identifier to uniformly distribute the value of $T_{Backoff}$ for a given UE (e.g., an MTC device) over the range from $T_{Min}$ to $T_{Max}$, the UE device may use a locally generated random number as input to an algorithm for calculating $T_{Backoff}$. An example of such an algorithm is shown below:

$$[3] \qquad T_{Backoff} = T_{Min} + \left\lfloor rand(0,1) \times \left( T_{Max} - T_{Min} \right) \right\rfloor$$

where $T_{Backoff}$ = Time delay for initial attach request following power restoration, in units of time; $T_{Min}$ = Minimum delay for initial request following power restoration, in units of time; $T_{Max}$ = Maximum delay for initial request following power restoration, in units of time; and $rand(0,1)$ = Random number between 0 and 1.

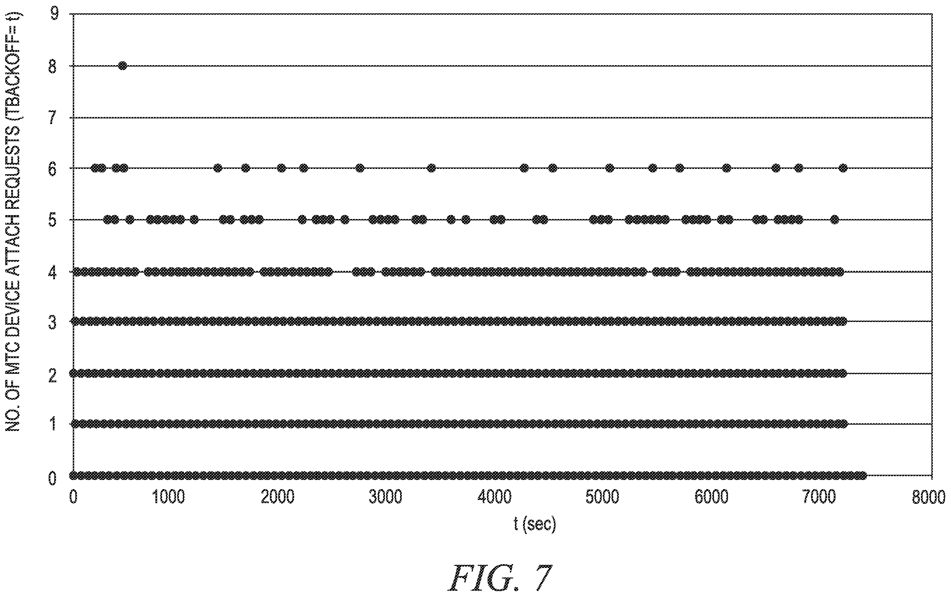

FIG. 7 illustrates the results of a simulation that shows the distribution of MTC device attach requests over the interval from 15 s to 2 hrs using the previously described random number-based algorithm. The results show that, at most, the network can expect 8 attach requests over any one second interval in the period from $T_{Min}$ to $T_{Max}$.

Table 2 shows the rate of occurrence for a given number of MTC devices attach requests per second over the time period of the simulation. The table shows that 24.63% of the time, a network can expect no MTC devices to attempt an attach request for any one second interval over the time period from $T_{Min}$ to $T_{Max}$. Similarly, 35.19% of the time, it can expect one MTC device attach request over a given one second interval.

| Number of MTC Device Attach Requests per second over interval from $T_{Min}$ to $T_{Max}$ (15s - 2hrs) | Number of Times Occurring | Rate of Occurrence |
|---|---|---|
| 0 | 1770 | 24.63% |
| 1 | 2529 | 35.19% |
| 2 | 1694 | 23.57% |
| 3 | 799 | 11.12% |
| 4 | 307 | 4.27% |
| 5 | 66 | 0.92% |
| 6 | 20 | 0.28% |
| 7 | 0 | 0% |
| 8 | 1 | 0.01% |
| 9 | 0 | 0% |

Another embodiment of the invention allows an operator to establish priority groupings of UEs (e.g., MTC devices) within its communication network. This enables an operator to ensure that UEs considered of higher priority reestablish connectivity to the network in advance of lower priority devices following a power failure/restoration event. For example, a network operator may desire that UEs performing more critical tasks, such as theft detection, attach to the network in advance of less critical tasks, such as wireless meter reading.

This may be achieved by assigning each UE a priority value, $p$, from the set of assignable priority values $\{1,2,...,p_{Max}\}$. Upon restoration of power following a power failure, the MTC device could use the assigned priority value in algorithm for determining the value of $T_{Backoff}(p)$. Upon the expiration of $T_{Backoff}(p)$, the UE would perform an attach procedure with the serving network.

To ensure more uniformity of UE attach requests over time, the algorithm for calculating $T_{Backoff}(p)$ may incorporate aspects of the techniques previously described using either a hardware identifier or a random number generator within the UE.

An example algorithm for determining $T_{Backoff}(p)$ using a random number generator is provided below:

$$[4] \qquad T_{Backoff}(p) = T_{Min} + \left\lfloor \left[ (p-1) + rand(0,1) \right] \times \left[ \frac{T_{Max} - T_{Min}}{p_{Max}} \right] \right\rfloor$$

where $T_{Backoff}(p)$ = Time delay for initial attach request following power restoration, in units of time, as a function of assigned priority of UE; $p$. $T_{Min}$ = Minimum delay for initial request following power restoration, in units of time; $T_{Max}$ = Maximum delay for initial request following power restoration, in units of time; $rand(0,1)$ = Random number between 0 and 1; and $p$= Assigned priority of U, where $p \in \{1,2,...,p_{Max}\}$. A lower value of $p$ indicates higher priority. Finally $p_{Max}$ =

Maximum value of assigned priority values (integer).

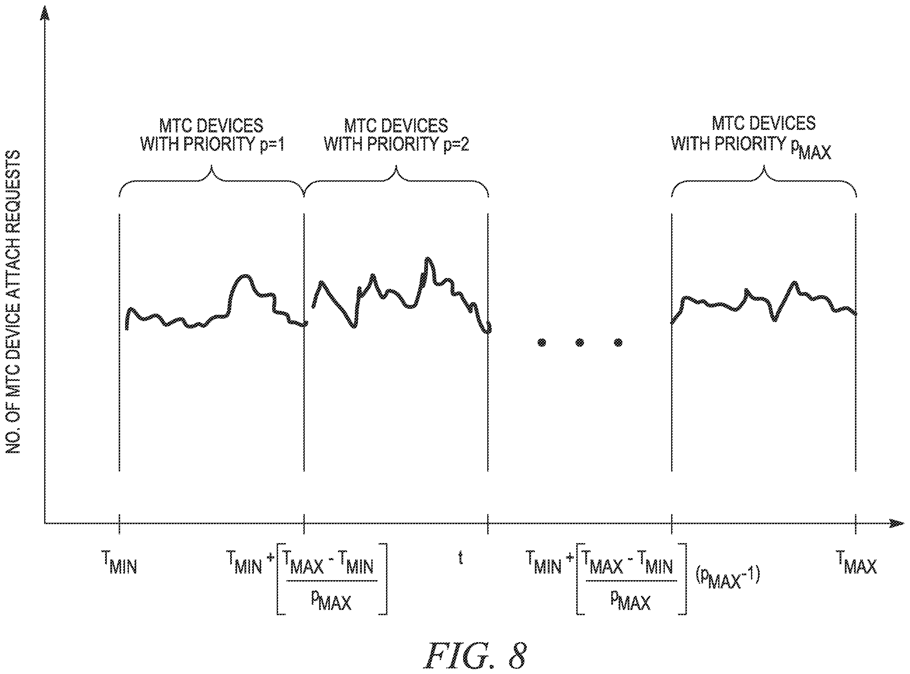

As stated, the above embodiment allows the operator to distribute the UEs attach attempts over time and assign each MTC device to a priority class. The effect of this embodiment is shown in FIG. 8, which illustrates the grouping of MTC attach requests that are assigned by priority value.

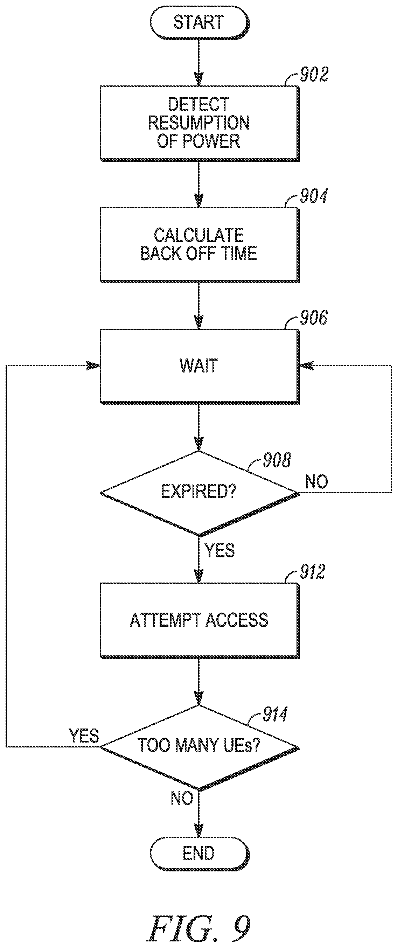

Referring to FIG. 9, with appropriate reference to FIG. 1, an example of a procedure that may be used to reduce APN congestion according to an embodiment of the invention will now be described. It is assumed that the UE 116 has initially detected a loss of power (e.g., based on a signal received from the sensor 222). At step 902, the UE 116 detects a resumption of power (e.g., based on a signal from the sensor 222). At step 904, the processor 220 of the UE 116 calculates a back off time according to one or more of the embodiments described above. The processor 220 may obtain the algorithm (and any other instructions need to perform the steps of the flowchart) from the memory 240. At step 906, the UE 116 waits. If, at step 908, the back off time has not expired, the process loops back step 906. If the back off time has expired, then, at step 912, the UE 116 attempts to attach to the E-UTRAN. For example, the UE 116 may transmit an attach request that identifies a resource of a PDN 105 by APN. If, at step 914, the requested resource is unavailable (due to, for example, an excessive number of UEs 116 attempting to access the resource following a power restoration), then the attachment request will be denied. In such case, the process loops back to step 906. If, on the other hand, the UE 116 successfully attaches to the E-UTRAN 102 and is able to access the requested resource of the PDN 105, then the process ends.

The present disclosure illustrates the architecture, functionality, and operation of possible implementations of systems and methods according to various embodiments of the present invention. In this regard, procedures outlined in the disclosure (for example, in flowchart of FIG. 9) may be implemented as a module, segment, or portion of code, which comprises one or more executable instructions for implementing the specified functions (e.g., on the processor 220 in combination with the memory 240 of FIG. 2). Furthermore, the simplified block diagrams (e.g., FIGS. 2 and 3) may be modified or added to without departing from the embodiments described here.

It should also be noted that, in some alternative implementations, functions noted in this disclosure may occur out of the order noted in the figures (e.g., in the flowchart of FIG. 9) or in the text. For example, two steps shown or described in succession may, in fact, be executed substantially concurrently, or the steps may sometimes be executed in the reverse order, depending upon the functionality involved.

While the present disclosure and the best modes thereof have been described in a manner establishing possession and enabling those of ordinary skill to make and use the same, it will be understood and appreciated that there are equivalents to the exemplary embodiments disclosed herein and that modifications and variations may be made thereto without departing from the scope of the appended claims.

## Claims

1. A method for reducing congestion on a communication network (102) following a power failure, the method comprising:

   detecting (902), by a user equipment, a restoration of power;
   receiving from the network a minimum time delay and a maximum time delay;
   calculating (904), by the user equipment, a time delay based on a randomly generated number, the minimum time delay, a difference between the maximum time delay and the minimum time delay, and a priority value associated with the user equipment based on a category of a message that is to be transmitted by the user equipment to the network upon gaining access to the network; and
   in response to detecting the power restoration, attempting (912) to access the network (102) upon expiration (908) of the calculated time delay.

2. The method of claim 1, wherein the calculated time delay equals a difference between the maximum time delay and the minimum time delay divided by a maximum priority value, multiplied by the randomly generated number, added to the priority value minus one, and added to the minimum time delay.

3. The method of claim 1 wherein attempting to access the network comprises attempting to attach to a radio access network.

4. The method of claim 3 wherein attempting to access the network further comprises:

   transmitting a request for a resource of a packet data network communicatively linked to the radio access network;
   receiving a message indicating that the requested resource is not available;

waiting for a period of time based on the calculated time delay; and
repeating the waiting step until receiving a message indicating that the requested resource is available.

5. The method of claim 3 wherein attempting to access the network further comprises:

transmitting a request for access to a packet data network communicatively linked to the radio access network;
receiving a message indicating that access to the packet data network is denied;
waiting for a period of time based on the calculated time delay; and
repeating the waiting step until receiving a message indicating that access to the packet data network is granted.

6. The method of claim 1,
wherein the power failure is on the user equipment, and:
wherein calculating the time delay is further based on selected digits from a unique identifier associated with the user equipment.

7. The method of claim 6 wherein the priority value associated with the user equipment is based on a type of tasks performed by the user equipment.

8. A communication device (116) comprising:

a memory (240) having a plurality of instructions stored therein; and
a processor (220) communicatively linked to the memory (240), wherein the processor (220) executes the instructions to carry out the method of any of claims 1-7.

**Patentansprüche**

1. Verfahren zum Verringern eines Staus in einem Kommunikationsnetz (102) nach einem Stromausfall, wobei das Verfahren Folgendes umfasst:

Detektieren (902) durch ein Anwendergerät einer Wiederherstellung der Stromversorgung;
Empfangen vom Netz einer minimalen Zeitverzögerung und einer maximalen Zeitverzögerung;
Berechnen (904) durch das Anwendergerät einer Zeitverzögerung auf der Grundlage einer zufällig erzeugten Zahl, der minimalen Zeitverzögerung, einer Differenz zwischen der maximalen Zeitverzögerung und der minimalen Zeitverzögerung und eines Prioritätswerts, der dem Anwendergerät auf der Grundlage einer Kategorie einer Nachricht, die nach dem Erlangen von Zugang zum Netz durch das Anwendergerät zum Netz gesendet werden soll, zugeordnet ist; und
Versuchen (912) als Antwort auf das Detektieren der Wiederherstellung der Stromversorgung nach Ablauf (908) der berechneten Zeitverzögerung, auf das Netz (102) zuzugreifen.

2. Verfahren nach Anspruch 1, wobei die berechnete Zeitverzögerung einer Differenz zwischen der maximalen Zeitverzögerung und der minimalen Zeitverzögerung dividiert durch einen maximalen Prioritätswert, multipliziert mit der zufällig erzeugten Zahl, addiert zum Prioritätswert minus eins und addiert zur minimalen Zeitverzögerung entspricht.

3. Verfahren nach Anspruch 1, wobei das Versuchen, auf das Netz zuzugreifen, das Versuchen, sich mit einem Funknetz zu verbinden, umfasst.

4. Verfahren nach Anspruch 3, wobei das Versuchen, auf das Netz zuzugreifen, ferner Folgendes umfasst:

Senden einer Anforderung eines Betriebsmittels eines Paketdatennetzes, das kommunikationstechnisch mit dem Funkzugangsnetz verbunden ist;
Empfangen einer Nachricht, die anzeigt, dass das angeforderte Betriebsmittel nicht verfügbar ist;
Warten für einen Zeitraum auf der Grundlage der berechneten Zeitverzögerung; und
Wiederholen des Warteschritts bis zum Empfangen einer Nachricht, die anzeigt, dass das angeforderte Betriebsmittel verfügbar ist.

5. Verfahren nach Anspruch 3, wobei das Versuchen, auf das Netz zuzugreifen, ferner Folgendes umfasst:

Senden einer Anforderung zum Zugang zu einem Paketdatennetz, das kommunikationstechnisch mit dem Funkzugangsnetz verbunden ist;
Empfangen einer Nachricht, die anzeigt, dass der Zugang zum Paketdatennetz abgewiesen wird;
Warten für einen Zeitraum auf der Grundlage der berechneten Zeitverzögerung; und
Wiederholen des Warteschritts bis zum Empfangen einer Nachricht, die anzeigt, dass der Zugang zum Paketdatennetz gewährt wird.

6. Verfahren nach Anspruch 1, wobei
   der Stromausfall im Anwendergerät vorliegt und
   das Berechnen der Zeitverzögerung ferner auf der Grundlage ausgewählter Stellen aus einer eindeutigen Kennung, die dem Anwendergerät zugeordnet ist, erfolgt.

7. Verfahren nach Anspruch 6, wobei der Prioritätswert, der dem Anwendergerät zugeordnet ist, auf einem Typ von Aufgaben, die durch das Anwendergerät durchgeführt werden, basiert.

8. Kommunikationseinrichtung (116), die Folgendes umfasst:

   einen Speicher (240), in dem mehrere Anweisungen gespeichert sind; und
   einen Prozessor (220), der mit dem Speicher (240) kommunikationstechnisch verbunden ist, wobei der Prozessor (220) die Anweisungen ausführt, um das Verfahren nach einem der Ansprüche 1-7 durchzuführen.


## Revendications

1. Un procédé pour réduire une congestion sur un réseau de communication (102) à la suite d'une panne de courant, le procédé comprenant :

   le fait (902) de détecter, par un équipement utilisateur, un rétablissement du courant ;
   le fait de recevoir, en provenance du réseau, un délai minimum et un délai maximum ;
   le fait (904) de calculer, par l'équipement utilisateur, un délai basé sur un nombre généré aléatoirement, le délai minimum, une différence entre le délai maximum et le délai minimum, et une valeur de priorité associée à l'équipement utilisateur sur la base d'une catégorie d'un message qui doit être transmis par l'équipement utilisateur au réseau lorsqu'il obtient l'accès au réseau ; et
   en réponse à la détection du rétablissement du courant, le fait (912) de tenter d'accéder au réseau (102) à l'expiration (908) du délai calculé.

2. Le procédé de revendication 1, dans lequel le délai calculé est égal à une différence entre le délai maximum et le délai minimum divisée par une valeur de priorité maximum, multipliée par le nombre généré de manière aléatoire, ajoutée à la valeur de priorité moins un, et ajoutée au délai minimum.

3. Le procédé selon la revendication 1, dans lequel le fait de tenter d'accéder au réseau comprend le fait de tenter de joindre un réseau d'accès radio.

4. Le procédé selon la revendication 3, dans lequel le fait de tenter d'accéder au réseau comprend en outre :

   le fait de transmettre une demande de ressource d'un réseau de données par paquets relié de façon communicante au réseau d'accès radio ;
   le fait de recevoir un message indiquant que la ressource demandée n'est pas disponible ;
   le fait d'attendre un certain temps en fonction du délai calculé ; et
   le fait de répéter l'étape d'attente jusqu'à la réception d'un message indiquant que la ressource demandée est disponible.

5. Le procédé selon la revendication 3, dans lequel le fait de tenter d'accéder au réseau comprend en outre :

   le fait de transmettre une demande d'accès à un réseau de données par paquets relié de façon communicante au réseau d'accès radio ;
   le fait de recevoir un message indiquant que l'accès au réseau de données par paquets est refusé ;
   le fait d'attendre un certain temps en fonction du délai calculé ; et

le fait de répéter l'étape d'attente jusqu'à la réception d'un message indiquant que l'accès au réseau de données par paquets est accordé.

6. Le procédé selon la revendication 1,

dans lequel la panne de courant se produit au niveau de l'équipement de l'utilisateur, et :
dans lequel le calcul du délai est en outre basé sur des chiffres sélectionnés à partir d'un identificateur unique associé à l'équipement utilisateur.

7. Le procédé selon la revendication 6, dans lequel la valeur de priorité associée à l'équipement utilisateur est basée sur un type de tâches effectuées par l'équipement utilisateur.

8. Un dispositif de communication (116) comprenant :

une mémoire (240) comportant une pluralité d'instructions stockées en elle ; et
un processeur (220) relié de manière communicative à la mémoire (240), le processeur (220) exécutant les instructions pour mettre en oeuvre le procédé selon l'une quelconque des revendications 1 à 7,

FIG. 1

network id.mnc<MNC>.mcc<MCC>.gprs

NETWORK
IDENTIFIER

OPERATOR
IDENTIFIER

*FIG. 1A*

SENSOR  ⚬ 222

ANTENNA  215

200

PROCESSOR 220

TRANSCEIVER 210

MEMORY 240

*FIG. 2*

| 8 DIGITS | 6 DIGITS | 1 DIGIT |
|---|---|---|
| TAC | SNR | CD/ SD |

IMEI 15 DIGITS

*FIG. 3*

| 8 DIGITS | 6 DIGITS | 2 DIGITS |
|---|---|---|
| TAC | SNR | SVN |

IMEISV 16 DIGITS

*FIG. 4*

*FIG. 5*

*FIG. 6*

*FIG. 7*

*FIG. 8*

*FIG. 9*

**EP 2 870 798 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2369883 A1
- US 2012033613 A1
- US 2012039171 A1